# FASCICULE DE BREVET EUROPEEN

(11) **EP 0 611 191 B1**
(45) Date de publication et mention de la délivrance du brevet: **08.09.1999**
(21) Numéro de dépôt: 94400234.4
(22) Date de dépôt: 04.02.1994
(51) Int. Cl.: B24B 9/06, B24B 7/22, B24B 7/00, B24B 27/00, B24B 41/00, B23Q 1/25, B28D 1/30, B25B 5/06, B24B 41/06

(54) **Machine à fraiser, percer, surfacer, moulurer et polir des pierres ou matériau similaire**
Maschine zum Fräsen, Bohren, Oberflächenbearbeiten, Profilschneiden und Polieren von Gestein oder gleichartigem Material
Machine for milling, drilling, planing, profiling and polishing stones or similar material

(30) Priorité: 08.02.1993 FR 9301340
(43) Date de publication de la demande: 17.08.1994
(73) Titulaire: THIBAUT S.A., F-14500 Vire (FR)
(72) Inventeur: Thibaut, Bernard, F-14500 Vire (FR)
(74) Mandataire: Boutin, Antoine

(56) Documents cités:
- EP-A- 0 369 562
- WO-A-91/04128
- DE-A- 3 532 903
- DE-A- 3 934 914
- DE-C- 880 836
- US-A- 2 877 815
- US-A- 3 923 086
- US-A- 4 995 288
- US-A- 5 156 383

## Description

L'invention est relative à une machine pour fraiser, percer, surfacer, moulurer et polir des pierres ou matériau similaire.

L'invention est particulièrement utile pour la fabrication de plaques de pierre ouvragées d'épaisseur faible, notamment de plans de cuisine et de salles de bain, en granit ou en marbre.

Le brevet d'invention français 73 17882 sous le N° 2.229.501 décrit un dispositif pour le fraisage ou le meulage de pierres ou matériau similaire. Ce dispositif donne généralement satisfaction, mais fait appel à un gabarit de reproduction correspondant au contour définitif prévu, de sorte que la précision du produit obtenu dépend du suivi du gabarit. Ces gabarits sont utilisés pour les formes curvilignes, mais également pour les formes à contour rectiligne.

Le brevet européen EP 0 196 941 décrit un dispositif de surfaçage et de polissage du chant vertical d'une pierre ou d'un élément préfabriqué massif. Ce dispositif est notamment utilisé en tant que partie d'une machine à fraiser, percer, surfacer, moulurer et polir de petites dimensions, vendue sous la dénomination GB 110 par la Société de droit français THIBAUT.

Cette machine dénommée GB 110 donne généralement satisfaction.

Toutefois, du fait que cette machine est montée soit sur poteau, soit sur éléments muraux permettant un déplacement latéral, soit sur colonne permettant une rotation totale, la fabrication de formes complexes présente des difficultés de coordination des déplacements.

L'invention a pour but de créer une nouvelle machine de petites dimensions et de fabrication économique, permettant de fabriquer sans difficulté des pièces de forme complexe.

L'invention a pour objet une machine à fraiser, percer, surfacer, moulurer et polir des pierres ou matériau similaire, du type comportant un chariot déplaçable en translation, ledit chariot recevant à articulation autour d'un axe vertical un bras, ledit bras portant un dispositif d'usinage réglable en position à pivotement autour d'un axe horizontal, de manière à usiner des pierres ou matériau analogue bridé sur un support par un système de fixation caractérisé en ce que, la machine comporte un châssis support simultanément ledit chariot et ledit support, ledit support étant une table de réception déplaçable en translation selon une première direction, ledit chariot étant déplaçable en translation selon une deuxième direction le long d'une poutre du châssis, et les deux directions de translation étant sensiblement perpendiculaires entre elles, la table de réception étant pourvue d'une pluralité de lumières aptes à recevoir à coulissement des organes de bridage ; chaque lumière présente une largeur sensiblement constante et une extrémité plus large que ladite largeur, de manière à permettre l'engagement et la retenue de douilles en forme de bobine percée ; et les organes de bridage sont montés à coulissement à travers les douilles.

Selon d'autres caractéristiques préférées :
- les organes de bridage sont montés prisonniers dans les douilles par des goupilles, ou moyens analogues ;
- la face supérieure de la table de réception est en matériau amortisseur du genre caoutchouc ou élastomère et le coincement des organes de bridage s'effectue à travers deux surfaces de contact successives, de manière à amortir toute vibration interne au châssis et à éviter toute fissuration des pierres ;
- les dimensions relatives des lumières, des douilles et des organes de bridage sont prédéterminées pour obtenir un coincement simultané d'une douille dans une lumière et d'un organe de bridage dans une douille, lors de l'application d'une force de bridage sur cet organe de bridage ;
- le dispositif d'usinage est relié à la partie principale du bras par un moyen de translation selon une troisième direction de translation, ladite troisième direction étant sensiblement verticale et orthogonale à la première direction et à la deuxième direction de translation ; un boîtier d'usinage portant un moteur et une broche d'entraînement d'un outil ledit boîtier d'usinage étant orientable à pivotement autour d'un axe perpendiculaire à ladite plaque d'orientation ;
- la machine comporte trois degrés de liberté en translation et trois degrés de liberté en rotation autour de trois axes, un premier axe étant sensiblement vertical et un deuxième axe étant sensiblement horizontal.

L'invention sera mieux comprise grâce à la description qui va suivre donnée à titre d'exemple non limitatif au regard des dessins annexés dans lesquels :
La figure 1 représente une vue schématique en perspective d'une machine selon un mode de réalisation de l'invention.
La figure 2 représente une vue schématique en coupe transversale d'une machine selon un mode de réalisation de l'invention.
La figure 3 représente une vue schématique agrandie dans le sens de la flèche III de la figure 2.
La figure 4 représente une vue schématique agrandie avec coupe partielle d'une table de réception de machine selon un mode de réalisation de invention.

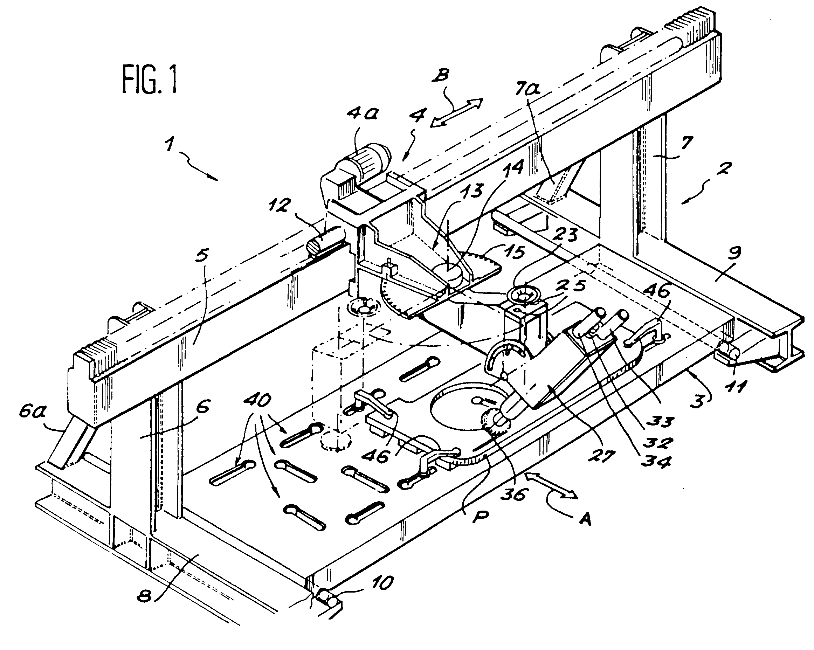

En référence à la figure 1, une machine désignée dans son ensemble par 1 comporte un châssis 2 supportant simultanément une table mobile 3 de réception des pièces P à usiner et un chariot d'usinage 4 déplaçable par exemple sous l'action d'une motorisation 4a engrenant avec une crémaillère ou une noix d'entraînement.

Le châssis 2 est constitué par assemblage d'une poutre principale 5, constituée par exemple d'un profilé rectangulaire creux, supportée parallèlement au sol, par deux piliers 6 et 7 éventuellement renforcés par des jambes 6a, 7a et directement fixés sur la base du châssis matérialisé par deux longerons 8 et 9.

Les longerons 8 et 9 portent deux axes parallèles 10 et 11, sur lesquels la table 3 est déplaçable en translation dans le sens de la flèche A au moyen de galets et verrouillable en position fixe par des moyens connus en soi. Le déplacement de la table est manuel ou commandé par un moyen de commande tel qu'un volant ou un moteur, non représenté.

La poutre principale 5 porte un axe 12 de guidage du chariot 4 équipé à cet effet de douilles à billes fendues non représentées et porte une barre carrée sous sa semelle inférieure coopérant avec des galets d'appui et de mise à niveau du chariot 4 dans le déplacement en translation du chariot 4 dans le sens de la flèche B.

Le chariot 4 se déplace ainsi le long de la poutre 5, tandis que la table 3 se déplace perpendiculairement à la poutre 5 : selon l'invention, on obtient ainsi un mouvement dit "rectangulaire" dont les courses correspondent sensiblement à la longueur et à la largeur de la table 3.

Compte tenu du poids des pièces mécaniques et des porte-à-faux entraînant des efforts mécaniques importants, les machines de l'art antérieur ne pouvaient dans des conditions économiques acceptables intégrer dans un même châssis 2 un mouvement rectangulaire de grandes dimensions: grâce à une solution simple consistant à affecter la première translation A à la table 3 de réception des pièces et à affecter la deuxième translation B au chariot 4, l'invention fournit une machine d'un seul tenant, immédiatement utilisable et déplaçable sur sa base 8-9, qui ne nécessite aucun travail de génie civil pour sa mise en place contrairement aux machines beaucoup plus importantes de l'art antérieur.

Le chariot 4, déplaçable en translation B et immobilisable le long de la poutre 5 au moyen de freins manuels non représentés, comporte un ensemble rigide 13 formant fourche de réception pour un bras articulé apte à pivoter de 180°autour d'un axe d'articulation vertical 14 depuis la position médiane représentée en traits pleins jusqu'à deux positions à angle droit parallèles à la poutre 5, dont une seule a été représentée en traits interrompus.

On prévoit à cet effet un demi-disque 15 servant à la fois de secteur angulaire d'orientation et de moyen de fixation en position au moyen de freins non représentés.

A une extrémité de la poutre 5, il est possible de garer des outils, en attente d'embarquement par le chariot 4, notamment un outil formant dispositif de polissage des chants en demi-rond ou en quart de rond.

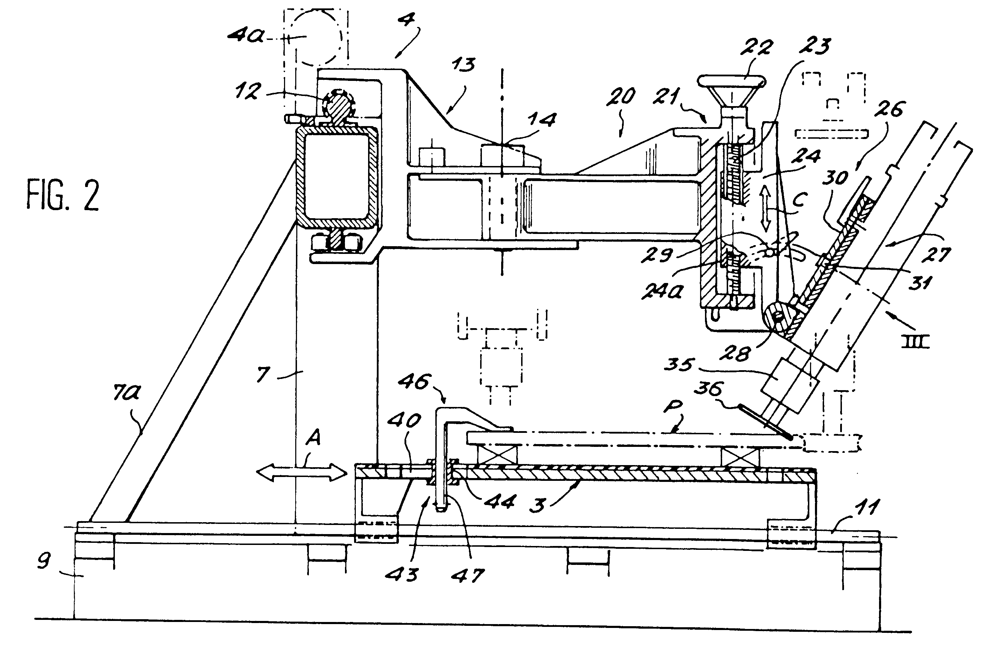

En référence à la figure 2, les chiffres de référence identiques désignent des éléments identiques ou similaires à ceux de la figure 1.

Le bras 20 articulé autour de l'axe vertical 14 présente une section rectangulaire avec des équerres de renfort supportant une table de déplacement vertical 21.

La table de déplacement vertical 21 comporte d'une part un volant manuel 22 de commande (ou un motoréducteur) d'une vis 23 à filet trapézoïdal et d'autre part un chariot 24 déplaçable en translation dans le sens de la flèche C le long de deux axes de coulissement 25 (figure 1) et de guidage vertical du chariot : à cet effet, le chariot comporte une noix déplaçable 24a ou un taraudage correspondant à la vis à filet trapézoïdal 23 de manière à déplacer verticalement le chariot 24 par rotation du volant 22.

Le chariot 24 porte un dispositif analogue au dispositif objet du brevet européen EP 0 196 941.

Le dispositif 26 comporte ainsi un boîtier 27 articulé autour d'un axe 28 horizontal entre une position vertical représentée en traits interrompus et une position horizontale non représentée, des moyens de blocage 29 étant prévus pour immobiliser le boîtier 27 dans une position intermédiaire choisie telle que celle représentée en traits pleins : le fonctionnement du dispositif 26 est ainsi analogue à celui d'un compas d'ouverture réglable.

De préférence, toutes les positions extrêmes correspondant à des directions parallèles ou perpendiculaires à des directions de référence choisies sont obtenues avec précision grâce à un arrêt en appui sur des butées sèches.

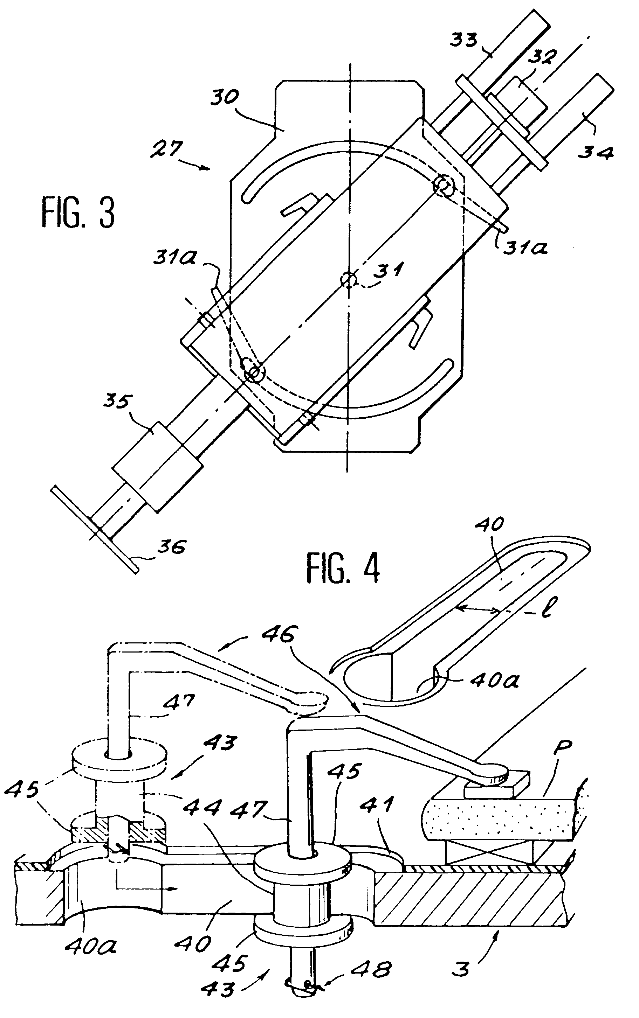

En référence à la figure 3, le boîtier 27 est lui-même monté sur une plaque d'orientation 30, de manière à pouvoir pivoter autour d'un axe 31 perpendiculaire à la plaque d'orientation 30 de 45°de part et d'autre de sa position médiane et à être maintenu par des moyens de blocage en position 31a.

Le boîtier 27 constitue une unité d'usinage comportant un moteur électrique 32 d'entraînement et deux vérins pneumatiques 33, 34 assurant une pression d'appui pour les opérations de polissage ou permettant de travailler en profondeur de passe grâce à une butée mécanique d'arrêt de la course de la broche.

Le moteur électrique 32 d'entraînement est de préférence un moteur électrique à variation de fréquence d'une puissance électrique inférieure à 5 kW, pour entraîner la broche 35 à une vitesse de rotation choisie en fonction de l'outil 36 correspondant.

Pour l'opération de détourage qui nécessite une grande vitesse, on prévoit avantageusement un moteur supplémentaire à grande vitesse (18000 tr/mn).

Avantageusement, la broche 35 est équipée d'un système de lecture et de suivi de gabarit non représenté pour faciliter la reproduction de profils de forme complexe.

La machine, pourvue de trois degrés de liberté en translation A, B, C, et de trois degrés de liberté en rotation autour des axes 14, 28 et 31 peut ainsi suivre sans difficulté des profils de forme complexe, la coordination des déplacements s'effectuant de manière naturelle par la simple décomposition géométrique des pièces à obtenir : cette machine, de par sa conception, permet donc de recevoir des commandes numériques appropriées des axes de translation et de rotation dans le cadre de fabrication en séries ou d'une conception et d'une fabrication assistée par ordinateur.

Dans l'art antérieur, les pierres P ou pièces à usiner étaient immobiles et ne se déplaçaient pas : elles étaient posées ou fixées à un support fixe, ce qui évitait les transmissions de vibration et les résonances entre le châssis de la machine et le support des pièces, car ces vibrations étaient notablement amorties par le sol de l'atelier.

Au contraire, les vibrations à basse fréquence voisines de la fréquence propre du châssis 2 sont directement transmises à travers le métal du bâti, ce qui présente un risque important de fissuration pour les matériaux fragiles tels que le marbre ou les pierres analogues.

En référence à la figure 4, un système de fixation de pierres P à usiner comporte une pluralité (figure 1) de lumières 40 ménagées dans la table de réception 3.

Les lumières 40 traversent entièrement la table 3, y compris la plaque supérieure 41 constituée en caoutchouc ou élastomère avec des reliefs antidérapants non représentés. Cette plaque supérieure en caoutchouc est découpée de manière à réserver une bordure métallique autour de chaque lumière 40.

Une lumière 40 présentant sensiblement une largeur constante et présentant à une extrémité un orifice 40a d'engagement de douille 43, chaque douille 43 présente une forme de bobine percée, constituée d'un fût central 44 cylindrique et de deux anneaux 45 d'extrémité présentant des dimensions assurant la retenue après engagement de la douille 43 dans la lumière 40 : à cet effet, le diamètre du fût 44 est inférieur à la largeur l de la lumière 40 et le diamètre d'un anneau 45 est supérieur à la largeur l de la lumière et inférieur au diamètre de l'orifice 40a.

Le diamètre d'un anneau 45 et la découpe de la plaque 41 en caoutchouc sont déterminés pour que l'anneau 45 soit uniquement en contact avec la bordure métallique précitée de manière à obtenir un contact métal sur métal lors du serrage.

Un valet 46 de type connu est monté coulissant par son pied cylindrique 47 à l'intérieur du fût cylindrique 44 et de préférence, monté prisonnier dans une douille 43 correspondante en étant retenu par une goupille 48.

Le valet 46 monté dans la douille 43 coulisse dans la rainure 40 jusqu'à une position choisie de blocage d'une pierre P.

Puis, à cette position, la simple application d'une force sur le valet 46 assure le verrouillage simultané du valet 46 dans la douille 43 et de la douille 43 dans la rainure 40, ce qui permet d'obtenir le bridage désiré de la pierre P.

Grâce à l'invention, on obtient ainsi un bridage efficace tout en évitant les transmissions de vibration risquant de fissurer la pierre P : ces vibrations déjà amorties par le tapis caoutchouc 41 sont également diminuées, du fait que leur transmission passe successivement à travers les surfaces de contact entre la douille 43 et la lumière 40 et entre la douille 43 et le pied cylindrique 47 du valet 46.

Du fait de cet amortissement interne des vibrations, la machine selon l'invention permet de fraiser, percer, surfacer, moulurer et polir des matériaux pierreux fragiles tels que du marbre ou un matériau analogue, sans risque de fissuration.

## Revendications

1. Machine à fraiser, percer, surfacer, moulurer et polir des pierres ou matériau similaire, du type comportant un chariot (4) déplaçable en translation, ledit chariot recevant à articulation autour d'un axe vertical un bras (20), ledit bras portant un dispositif d'usinage (27) réglable en position à pivotement autour d'un axe horizontal, de manière à usiner des pierres ou matériau analogue bridé sur un support par un système de fixation, caractérisée en ce que la machine comporte un châssis (2) supportant simultanément ledit chariot et ledit support, ledit support étant une table de réception déplaçable en translation selon une première direction (A), ledit chariot étant déplaçable en translation selon une deuxième direction (B) le long d'une poutre (5) du châssis, et les deux directions de translation étant sensiblement perpendiculaires entre elles, la table de réception étant pourvue d'une pluralité de lumières (40) aptes à recevoir à coulissement des organes de bridages (46), en ce que chaque lumière présente une largeur sensiblement constante et une extrémité plus large que ladite largeur, de minière à permettre l'engagement et la retenue de douilles (43) en forme de bobine percée ; et en ce que les organes de bridage sont montés à coulissement à travers les douilles.

2. Machine selon la revendication 1, caractérisée en ce que les organes de bridage (46) sont montés prisonniers dans les douilles par des goupilles (48), ou moyens analogues.

3. Machine selon la revendication 1 ou 2, caractérisée en ce que chaque lumière (40) présente une largeur (l) sensiblement constante et une extrémité (40a) plus large que ladite largeur (l), de manière à permettre l'engagement de douilles (43) en forme de bobine percée à travers ladite extrémité plus large (40a) et la retenue de ces douilles (43) le long de ladite largeur sensiblement constante.

4. Machine selon la revendication 2 ou 3, caractérisée en ce que les dimensions relatives des lumières (40), des douilles (43) et des organes de bridage (46) sont prédéterminées pour obtenir un coincement simultané d'une douille (43) dans une lumière (40) et d'un organe de bridage (46) dans une douille (43), lors de l'application d'une force de bridage sur cet organe de bridage (46).

5. Machine selon l'une quelconque des revendications précédentes, caractérisée en ce que la face supérieure (41) de la table de réception est en matériau amortisseur du genre caoutchouc ou élastomère et en ce que le coincement des organes de bridage (46) s'effectue à travers deux surfaces de contact (40-43, 43-46) successives, de manière à amortir toute vibration interne au châssis (2) et à éviter toute fissuration ou détérioration des pierres (P).

6. Machine selon la revendication 1, caractérisée en ce que le dispositif d'usinage (27) est relié à la partie principale du bras (20) par un moyen de translation (21) selon une troisième direction (C) de translation ladite troisième direction (C) étant sensiblement verticale et orthogonale à la première direction (A) et à la deuxième direction (B) de translation.

7. Machine selon la revendication 6, caractérisée en ce que le dispositif d'usinage (27) comporte d'une part une plaque d'orientation (30) solidaire du moyen (26) de réglage a position à pivotement autour d'un axe horizontal (28) et, d'autre part, un boîtier d'usinage, portant un moteur (32) et une broche (35) d'entraînement d'un outil, ledit boîtier d'usinage étant orientable à pivotement autour d'un axe (31) pependiculaire à ladite plaque d'orientation (30).

8. Machine selon l'une des revendications précédentes, caractérisée en ce que la machine (1) comporte trois degrés de liberté en translation (A, B, C) et trois degrés de liberté en rotation autour de trois axes (14, 28, 31), un premier axe (14) étant sensiblement vertical et un deuxième axe (28) étant sensiblement horizontal.

## Claims

1. Machine for milling, drilling, surfacing, moulding and polishing stones or similar material, of the type comprising a cradle (4) capable of parallel translation, said cradle receiving an arm (20) articulated around a vertical axis, said arm hearing a machining device (27) which is adjustable in position and is pivoted around a horizontal axis in order to machine stones or similar material flange-mounted on a support by a fastening system, characterised in that the machine comprises a base frame (2) simultaneously supporting said cradle and said support, said support being a supporting table capable of parallel translation in a first direction (A), said cradle being capable of parallel translation, in a second direction (B) along a beam (5) of the base frame, and the two directions of parallel translation being essentially perpendicular to one another, whereby the supporting table is provided with a plurality of apertures (40) capable of receiving sliding flange members (46); that each aperture has an essentially constant width and an end which is wider than said width to permit the engagement and retention of bushes (43) in the form of drilled spools; that the flange members are mounted to slide through the bushes.

2. Machine according to Claim 1, characterised in that the flange members (46) are mounted so as to be enclosed in the bushes by means of pins (48) or similar means.

3. Machine according to Claim 1 or 2, characterised in that each aperture (40) has an essentially constant width (l) and one end (40a) which is wider than said width (l) to permit the engagement of bushes (43) in the form of drilled spools through said wider end (40a) and the retention of these bushes (43) along said essentially constant width.

4. Machine according to Claim 2 or 3, characterised in that the dimensions relating to the apertures (40), bushes (43) and flange members (46) are predetermined in order to achieve simultaneous wedging of a bush (43) in an aperture (40) and a flange member (46) in a bush (43) upon application of a wedging force on this flange member (46).

5. Machine according to any one of the preceding claims, characterised in that the upper face (41) of the supporting table is made of a rubber- or elastomer-type damping material, and that the wedging of the flange members (46) is conducted through two successive contact surfaces (40-43, 43-46) in order to damp any internal vibration at the base frame (2) and to prevent any cracking or deterioration in the stones (P).

6. Machine according to Claim 1, characterised in that the machining device (27) is connected to the main section of the arm (20) by a translation means (21) in a third direction (C) of parallel translation, said third direction (C) being essentially vertical and orthogonal to the first direction (A) and second direction (B) of parallel translation.

7. Machine according to Claim 6, characterised in that the machining device (27) comprises, on the one hand, a swing-out plate (30) integral to the means (26) for position adjustment capable of pivoting around a horizontal axis (28) and, on the other hand, a machining assembly bearing a motor (32) and a drive shaft (35) for a tool, and said machining assembly can be swinged out by pivoting around an axis (31) perpendicular to said swing-out plate (30).

8. Machine according to one of the preceding claims, characterised in that the machine (1) comprises three degrees of freedom of parallel translation (A,B,C) and three degrees of freedom of rotational motion around three axes (14, 28, 31), a first axis (14) being essentially vertical and a second axis (28) being essentially horizontal.

## Patentansprüche

1. Maschine zum Fräsen, Bohren, Oberflächenbearbeiten, Profilschneiden und Polieren von Gestein oder gleichartigem Material, mit einem tranlatorisch bewegbaren Schlitten (4), der in gelenkiger Verbindung um eine vertikale Achse einen Arm (20) aufweist, der eine Bearbeitungseinrichtung (27) trägt, die durch Schwenken um eine horizontale Achse in eine Position einstellbar ist, in der das Gestein oder analoges Material, welches auf einem Support durch ein Befestigungssystem festgehalten ist, bearbeitet werden kann, **dadurch gekennzeichnet**, daß die Maschine einen sowohl den Schlitten als auch den Support aufnehmenden Rahmen (2) aufweist, wobei der Support als Aufnahmetisch ausgebildet ist, der translatorisch in einer ersten Richtung (A) bewegbar ist, während der Schlitten in einer zweiten Richtung (B) längs eines Trägers (5) des Rahmens bewegbar ist und die beiden Richtungen der translatorischen Bewegungen im wesentlichen senkrecht aufeinander stehen, daß der Aufnahmetisch mit einer Vielzahl zur gleitenden Aufnahme von Befestigungsorganen (46) ausgebildeter Schlitze (40) versehen ist, wobei jeder Schlitz eine im wesentlichen konstante Breite und ein Endstück, das weiter als die Breite ist, aufweist, so daß er das Einsetzen und Verankern von Buchsen (43) in Form einer durchbrochenen Spule ermöglicht, und daß die Befestigungsorgane die Buchsen gleitend durchsetzen.

2. Maschine nach Anspruch 1, **dadurch gekennzeichnet**, daß die Befestigungsorgane (46) in den Buchsen durch Stifte (48) oder analoge Mittel festgelegt vorgesehen sind.

3. Maschine nach Anspruch 1 oder 2, **dadurch gekennzeichnet**, daß jeder Schlitz (40) eine im wesentlichen konstante Breite (l) und ein Endstück (40a), das weiter als die Breite (l) ist, in der Weise aufweist, daß er das Einsetzen von Buchsen (43) in Form einer durchbrochenen Spule durch das größere Endstück (40a) und das Verankern der Buchsen (43) längs der im wesentlichen konstanten Breite ermöglicht.

4. Maschine nach Anspruch 2 oder 3, **dadurch gekennzeichnet**, daß die Dimensionen der Schlitze (40), der Buchsen (43) und der Befestigungsorgane (46) so festgelegt und aufeinander abgestimmt sind, daß beim Auftreten einer Festhaltekraft auf das Befestigungsorgan (46) eine gleichzeitige Klemmung einer Buchse (43) in einem Schlitz (40) und eines Befestigungsorgans (46) in einer Buchse (43) eintritt.

5. Maschine nach einem der vorangehenden Ansprüche, **dadurch gekennzeichnet**, daß die Oberseite (41) des Aufnahmetisches aus einem dämpfenden Material wie Gummi oder Elastomer besteht und daß die Klemmung der Befestigungsorgane (46) über zwei aufeinander folgende Kontaktflächen (40-43, 43-46) in der Weise erfolgt, daß jede interne Vibration am Rahmen (2) gedämpft und jede Rißbildung oder Beschädigung des Gesteins (P) vermieden wird.

6. Maschine nach Anspruch 1, **dadurch gekennzeichnet**, daß die Bearbeitungseinrichtung (27) mit dem Hauptteil des Armes (20) über translatorische in einer dritten Richtung (C) wirkende Mittel verbunden ist, wobei die dritte Richtung (C) im wesentlichen vertikal und orthogonal zu der ersten Richtung (A) und zu der zweiten Richtung (B) ist.

7. Maschine nach Anspruch 6, **dadurch gekennzeichnet**, daß die Bearbeitungseinrichtung (27) einerseits eine fest mit einem Steuermittel (26) für die Schwenkpositionierung um eine horizontale Achse (28) verbundene Orientierungsplatte (30) und andererseits ein Bearbeitungsgehäuse, das einen Motor (32) und eine Antriebsspindel (35) für ein Werkzeug trägt, aufweist, wobei das Bearbeitungsgehäuse durch Schwenken um eine senkrecht zu der Orientierungsplatte verlaufende Achse (31) einstellbar ist.

8. Maschine nach einem der vorangehenden Ansprüche, **dadurch gekennzeichnet**, daß die Maschine (1) drei translatorische Freiheitsgrade (A, B, C) und drei rotatorische Freiheitsgrade um drei Achsen (14, 28, 31) aufweist, wobei eine erste Achse (14) im wesentlichen vertikal und eine zweite Achse (28) im wesentlichen horizontal ausgerichtet sind.
